# EUROPEAN PATENT SPECIFICATION

(11) **EP 4 104 965 B1**
(45) Date of publication and mention of the grant of the patent: **23.09.2026**
(21) Application number: 22172916.3
(22) Date of filing: 12.05.2022
(51) Int. Cl.: B23K 26/40, B23K 26/38, B23K 103/16

(54) **LASER CUTTING METHOD**
LASERSCHNEIDEVERFAHREN
PROCÉDÉ DE DÉCOUPE AU LASER

(30) Priority: 17.06.2021 CN 202110671637
(43) Date of publication of application: 21.12.2022
(73) Proprietor: Shenzhen Geesun Intelligent Technology Co., Ltd., Shenzhen, Guangdong 518000 (CN)
(72) Inventor: LI, Xiaoping, Shenzhen, 518000 (CN); WU, Xueke, Shenzhen, 518000 (CN); XIONG, Binbin, Shenzhen, 518000 (CN); YANG, Rukun, Shenzhen, 518000 (CN)
(74) Representative: Loyer & Abello

(56) References cited:
- EP-A1- 3 477 754
- JP-A- 2000 149 911

## Description

The present invention relates to the technical field of laser cutting, in particular to a laser cutting method.

### Background Art

At present, laser cutting is widely used in various technical fields due to high efficiency, flexibility and wide adaptability thereof. However, when the laser cutting is performed on some to-be-cut parts (such as positive plates of lithium-ion cell), the melted material splashes seriously, and a large number of melted beads may remain on the surface of the to-be-cut part, which affects the quality of the to-be-cut part.

In view of this, it is important to design a laser cutting method to ensure the quality of the to-be-cut part, especially in industrial production.

EP3477754A1 (describing the preamble of claim 1) shows a method for manufacturing a secondary battery and a secondary battery using the same, which can improve the quality of a cut surface of an electrode plate and improve the reliability of the secondary battery.

### Summary

The purpose of the present invention is to provide a laser cutting method, which can ensure the quality of the to-be-cut part, avoid the occurrence of material splashing, and have simple steps and high cutting efficiency.

The present invention defines a laser cutting method according to claim 1, comprising inter alia the following
steps of: removing an active material on the surface of a preset position of a to-be-cut part; and performing laser cutting on the to-be-cut part at the preset position to cut off the to-be-cut part,
removing an active material on the surface of a preset position of a to-be-cut part comprises: performing laser irradiation on the preset position of the to-be-cut part to remove the active material on the surface of the to-be-cut part, wherein
the to-be-cut part is of a sheet shape, and the two sides of the to-be-cut part are oppositely provided with a first active material and a second active material, and the step of removing an active material on the surface of a preset position of a to-be-cut part comprises: using a first laser beam to remove the first active material located on one side of the to-be-cut part,
performing laser cutting on the to-be-cut part at the preset position to cut off the to-be-cut part comprises: using a second laser beam to cut off the to-be-cut part.

Optionally, the laser cutting method further comprises a step of: using the second laser beam to remove the second active material located on the other side of the to-be-cut part while performing the step of performing laser cutting on the to-be-cut part at the preset position to cut off the to-be-cut part.

Optionally, after the step of performing laser cutting on the to-be-cut part at the preset position to cut off the to-be-cut part, the laser cutting method further comprises a step of: using the third laser beam to remove the second active material located on the other side of the to-be-cut part.

Optionally, the to-be-cut part is of a sheet shape, and the two sides of the to-be-cut part are oppositely provided with a first active material and a second active material, and the step of removing an active material on the surface of a preset position of a to-be-cut part comprises: using the first laser beam to remove the first active material located on one side of the to-be-cut part; and using a fourth laser beam to remove the second active material located on the other side of the to-be-cut part.

Optionally, the step of removing an active material on the surface of a preset position of a to-be-cut part comprises: coating a chemical agent on the preset position of the to-be-cut part to remove the active material on the surface of the to-be-cut part.

Optionally, the step of removing an active material on the surface of a preset position of a to-be-cut part comprises: brushing or scraping off the active material on the surface of the preset position of the to-be-cut part.

The laser cutting method provided by the present invention has the following beneficial effects.

The laser cutting method provided by the present invention first removes the active material on the surface of the preset position of the to-be-cut part; and then performs the laser cutting on the to-be-cut part at the preset position to cut off the to-be-cut part. Compared with the prior art, since the laser cutting method provided by the present invention performs the step of removing the active material on the surface of the preset position of the to-be-cut part, the quality of the to-be-cut part can be guaranteed, the occurrence of material splashing can be avoided, the steps are simple, and the cutting efficiency is higher.

### Brief Description of Drawings

In order to illustrate the technical solutions of the embodiments of the present invention more clearly, the drawings needed to be used in the embodiments will be briefly introduced below, it should be understood that the following drawings only show some embodiments of the present invention, and therefore should not be regarded as a limitation of the scope, and for those ordinarily skilled in the art, other relevant drawings can also be obtained in light of these drawings, without using any inventive efforts.
FIG. 1 is a block diagram of steps of a laser cutting method provided by a first embodiment of the present disclosure;
FIG. 2 is a structural schematic view of the laser cutting method provided by the first embodiment of the present disclosure applied to a to-be-cut part;
FIG. 3 is a structural schematic view of the laser cutting method provided by the second embodiment of the present disclosure applied to the to-be-cut part; and
FIG. 4 is a structural schematic view of the laser cutting method provided by the third embodiment of the present disclosure applied to the to-be-cut part.

Reference signs: 110-first laser; 120-second laser; 130-third laser; 140-fourth laser; 200-to-be-cut part; 210-first active material; 220-second active material.

### Detailed Description of Embodiments

In order to make the purposes, technical solutions and advantages of the embodiments of the present invention clearer, the technical solutions in the embodiments of the present invention will be clearly and completely described below in combination with the accompanying drawings.

It should be noted that similar reference numerals and letters indicate similar items in the following accompanying drawings, therefore, once a certain item is defined in one drawing, it does not need to be further defined and explained in the subsequent drawings.

In the description of the present invention, it should be noted that the orientation or positional relationship indicated by the terms such as "inner", "outer" "upper", "lower", and "horizontal" are based on the orientation or positional relationship as shown in the accompanying drawings, or it is the orientation or positional relationship that the product of the present invention is usually placed in use, merely for facilitating the description of the present invention and simplifying the description, rather than indicating or implying that related devices or elements have to be in the specific orientation, or configured and operated in a specific orientation, therefore, they should not be construed as limitations on the present invention. Besides, terms "first", "second" and "third" etc. are merely for distinguishing the description, but should not be construed as indicating or implying importance in relativity.

In the description of the present invention, it should be noted that, unless otherwise definitely specified and limited, the terms "provide", "link", "mount" and "connect" should be understood in a broad sense, for example, they can be fixed connection, detachable connection or integrated connection; they can be mechanical connection or electrical connection; they can be directly attached or indirectly attached by intermediate medium, and can be the internal communication between two components. For those ordinarily skilled in the art, the specific meaning of the above terms in the present invention can be understood according to the specific situation.

Some embodiments of the present invention will be described in detail below in combination with the accompanying drawings.

In the production process of lithium-ion cell, the positive plate of lithium-ion cell needs to be cut off, however, when the laser cutting is performed on the positive plate, the melted material splashes seriously, and a large number of melted beads may remain on the surface of the positive plate, which affects the quality of positive plate, thereby affecting the quality of the lithium-ion cell.

Therefore, through experimental research and theoretical analysis of the mechanism of the interaction between the laser and the material to be cut, the inventor has determined that the cause of the splashing is that a violent reduction reaction occurs between the carrier aluminum foil and the ternary positive electrode material of the positive plate due to the local high temperature of the laser. Especially, the ternary and lithium cobalt oxide positive electrode material with layered microscopic crystal structure has high oxygen content and poor structural stability, which are easier to have an aluminothermic reduction reaction with the carrier aluminum foil, the reaction is exothermic and the temperature rise can reach 3000 degrees, resulting in serious material splashing.

In the process of performing laser cutting on the positive plate, the gas temperature near the cut place rises rapidly, such that the gas is ionized and expanded violently, resulting in the splashing of the molten materials, which seriously affects the quality of the positive plate. In addition, the lithium in the ternary material may be reduced at high temperature and be in a plasma or atomic state, the lithium atoms in this state react violently with oxygen and moisture in the air to further increase the temperature, which aggravates the degree of splashing, and expands the heat-affected area, resulting in a decrease in the performance of the positive plate and even uselessness.

The inventor found through research that if the laser power is reduced to cut the positive plate, the material splashing can be alleviated, but the cutting efficiency will be greatly reduced. Therefore, the present invention provides a laser cutting method, which can improve the cutting efficiency on the premise of ensuring the quality of the positive plate.

### First Example

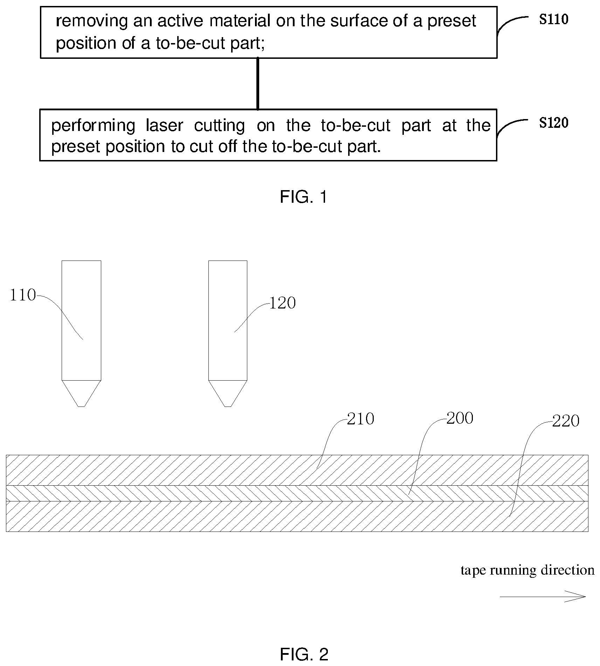

Referring to FIG. 1 and FIG. 2 in combination, an embodiment of the present disclosure provides a laser cutting method, which is used for performing the laser cutting on a to-be-cut part 200. It can ensure the quality of the to-be-cut part 200, and avoid the occurrence of material splashing, the steps are simple, and the cutting efficiency is higher.

It should be noted that the to-be-cut part 200 is of a sheet shape, the surface of the to-be-cut part 200 is provided with an active material, and the to-be-cut part 200 is moved in the tape running direction (moving direction), so as to facilitate the laser cutting. Specifically, the active material includes a first active material 210 and a second active material 220, and the first active material 210 and the second active material 220 are oppositely provided on two sides of the to-be-cut part 200.

In this embodiment, the to-be-cut part 200 is a positive plate, and the surface of the positive plate is provided with a positive active material, the laser cutting method is used for performing laser cutting on the positive plate.

The laser cutting method includes the following steps.

Step S110: removing an active material on the surface of a preset position of a to-be-cut part 200.

It should be noted that, in step S110, the active material on the to-be-cut part 200 is removed, so as to avoid the occurrence of material splashing caused by the violent reduction reaction occurred between the to-be-cut part 200 and the active material when the to-be-cut part 200 is subsequently cut. In this embodiment, the ternary positive electrode material on the carrier aluminum foil of the positive plate is removed, so as to avoid the violent reduction reaction occurred between the carrier aluminum foil and the ternary positive electrode material when the carrier aluminum foil is subsequently cut, thereby avoiding the occurrence of material splashing and ensuring the quality of the positive plate.

In this embodiment, laser irradiation is performed on the preset position of the to-be-cut part 200 to remove the active material on the surface of the to-be-cut part 200.

Specifically, step S110 includes a following step.

Step S111: using the first laser beam to remove the first active material 210 located on one side of the to-be-cut part 200.

In step S111, the first laser 110 is used to emit a first laser beam to the preset position of the to-be-cut part 200, so as to remove the first active material 210 at the preset position. Specifically, the first active material 210 is of a layered shape, and the first laser beam cuts off the first active material 210 at the preset position, so as to form a groove on the first active material 210, thereby exposing the to-be-cut part 200 located below the first active material 210, which is convenient for subsequent cutting the to-be-cut part.

Step S120: performing laser cutting on the to-be-cut part 200 at the preset position to cut off the to-be-cut part 200.

Specifically, step S120 includes a following step.

Step S121: using the second laser beam to cut off the to-be-cut part 200, and simultaneously using the second laser beam to remove the second active material 220 located on the other side of the to-be-cut part 200.

It should be noted that, in step S121, the second laser 120 is used to emit the second laser beam to the preset position of the to-be-cut part 200, so as to remove the second active material 220 while cutting the to-be-cut part 200. Specifically, the second active material 220 is of a layered shape, and the second laser beam cuts off the to-be-cut part 200 at the preset position, and at the same time, the second laser beam cuts off the second active material 220 located below the to-be-cut part 200, so as to complete the entire laser cutting for the to-be-cut part 200.

It is worth noting that the laser cutting method according to the present invention uses the method of layered cutting to perform laser cutting on the to-be-cut part 200, wherein the energy densities of the first laser beam and the second laser beam used for layered cutting are different to ensure the reliability of the layered cutting.

According to the present invention, when using the first laser beam to remove the first active material 210, the energy density of the first laser beam is relatively small, such that it removes only the first active material 210 without causing damage to the to-be-cut part 200, that is, the first laser beam removes only the ternary positive electrode material without damaging the carrier aluminum foil, in this way, the temperature of the ternary positive electrode material is relatively low, there is no aluminothermic reduction reaction with the carrier aluminum foil, thereby avoiding the occurrence of material splashing. According to the present invention, when the second laser beam is used to cut off the to-be-cut part 200, the energy density of the second laser beam is relatively large, so that the to-be-cut part 200 and the second active material 220 is easily cut off, and the cutting efficiency is high, at this time, as the second active material 220 is located on the back side of the to-be-cut part 200, and the second laser beam does not directly irradiate on the second active material 220, that is, the second laser beam does not directly irradiate on the ternary positive electrode material, and the temperature of the ternary positive electrode material is relatively low, there is no aluminothermic reduction reaction with the carrier aluminum foil, thereby avoiding the occurrence of material splashing.

The laser cutting method provided by the embodiment of the present invention first removes the active material on the surface of the preset position of the to-be-cut part 200; and subsequently performs laser cutting on the to-be-cut part 200 at the preset position to cut off the to-be-cut part 200. Compared with the prior art, since the laser cutting method provided by the present invention performs the step of removing the active material on the surface of the preset position of the to-be-cut part 200, the quality of the to-be-cut part 200 can be guaranteed, and the occurrence of material splashing can be avoided, the steps are simple, and the cutting efficiency is higher.

### Second Example

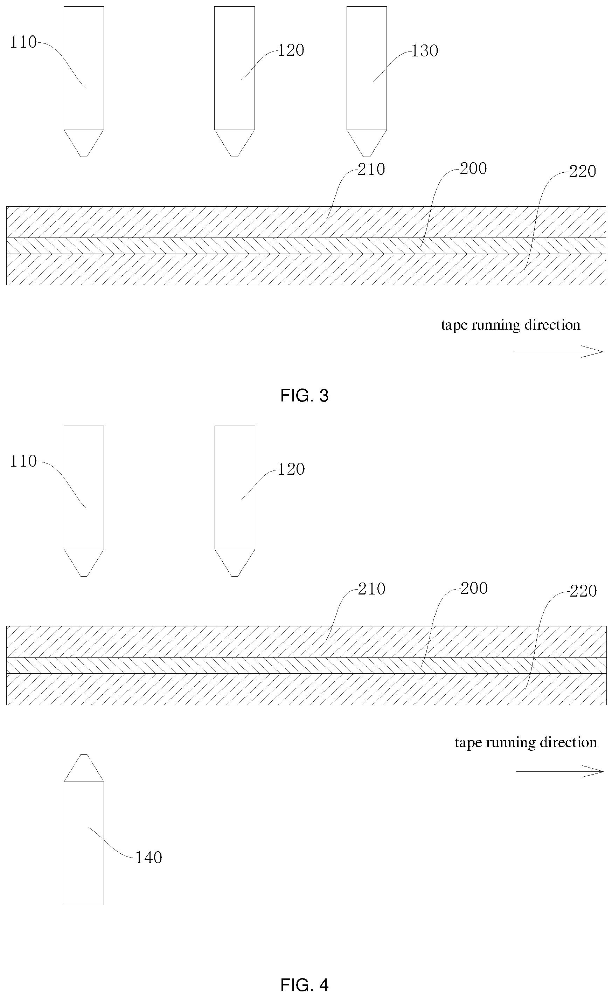

Referring to FIG. 3, an embodiment of the present invention provides a laser cutting method, compared with the first example, the difference of the present embodiment is that the laser cutting mode is different.

Step S211: using the first laser beam to remove the first active material 210 located on one side of the to-be-cut part 200.

Step S221: using the second laser beam to cut off the to-be-cut part 200.

It should be noted that, in step S221, the second laser 120 is used to emit a second laser beam to the preset position of the to-be-cut part 200, so as to cut off the to-be-cut part 200 without causing damage to the second active material 220. Specifically, the second laser 120 performs laser cutting on the to-be-cut part 200 through the method of scanning and cutting for multiple times, so that the second laser beam only cuts off the to-be-cut part 200 without affecting the second active material 220.

Step S231: using the third laser beam to remove the second active material 220 located on the other side of the to-be-cut part 200.

It should be noted that, in step S231, since the to-be-cut part 200 has been cut off, the second active material 220 can be removed by a third laser beam with any energy density. The third laser 130 is used to emit the third laser beam to the preset position to remove the second active material 220 at the preset position, at this time, the third laser beam only acts on the ternary positive electrode material, and there is no aluminothermic reduction reaction with the carrier aluminum foil, thereby avoiding the occurrence of material splashing.

The beneficial effects of the laser cutting method provided by the embodiment of the present invention are the same as those of the first example, which are not repeated here.

### Third Example

Referring to FIG. 4, an embodiment of the present invention provides a laser cutting method, compared with the first example, the difference of the present embodiment is that the laser cutting mode is different.

Step S311: using the first laser beam to remove the first active material 210 located on one side of the to-be-cut part 200.

Step S321: using the fourth laser beam to remove the second active material 220 located on the other side of the to-be-cut part 200.

It should be noted that, in step S321, the fourth laser 140 is used to emit the first laser beam to the preset position of the to-be-cut part 200, so as to remove the second active material 220 at the preset position. Specifically, the second active material 220 is of a layered shape, and the fourth laser beam cuts off the second active material 220 at the preset position to form a groove on the second active material 220, thereby exposing the to-be-cut part 200, which is convenient for subsequent cutting the to-be-cut part. Specifically, the energy density of the fourth laser beam is relatively small, so it removes only the second active material 220 without causing damage to the to-be-cut part 200.

Step S331: using the second laser beam to cut off the to-be-cut part 200.

It should be noted that, in step S331, the energy density of the second laser beam is relatively large, and the second laser 120 is used to emit the second laser beam to the preset position of the to-be-cut part 200 to easily cut off the to-be-cut part 200.

The beneficial effects of the laser cutting method provided by the embodiment of the present invention are the same as those of the first example, which are not repeated here.

## Claims

1. A laser cutting method, comprising:
removing an active material on a surface of a preset position of a to-be-cut part (200),
**characterised in that**:
the active material is ternary positive electrode material and the to-be-cut part (200) is a positive plate which is a carrier aluminum foil;
and, **in that** the method further comprises the following:
performing laser cutting on the to-be-cut part (200) at the preset position to cut off the to-be-cut part (200);
wherein the step of removing an active material on a surface of a preset position of a to-be-cut part (200) comprises:
performing laser irradiation on the preset position of the to-be-cut part (200) to remove the active material on the surface of the to-be-cut part (200);
wherein the to-be-cut part (200) is of a sheet shape, and two sides of the to-be-cut part (200) are oppositely provided with a first active material (210) and a second active material (220), and the step of removing an active material on a surface of a preset position of a to-be-cut part (200) comprises:
using a first laser beam to remove the first active material (210) located on one side of the to-be-cut part (200);
and wherein the step of performing laser cutting on the to-be-cut part (200) at the preset position to cut off the to-be-cut part (200) comprises:
using a second laser beam to cut off the to-be-cut part (200);
wherein the energy density of the first laser beam is relatively small, such that it can only remove the first active material (210) without causing damage to the to-be-cut part (200), and the energy density of the second laser beam is relatively large, so that the to-be-cut part (200) and the second active material (220) can be easily cut off, wherein the energy densities of the first laser beam and the second laser beam used for layered cutting are different to ensure the reliability of the layered cutting.

2. The laser cutting method according to claim 1, wherein the laser cutting method further comprises:
using the second laser beam to remove the second active material (220) located on the other side of the to-be-cut part (200) while performing the step of performing laser cutting on the to-be-cut part (200) at the preset position to cut off the to-be-cut part (200).

3. The laser cutting method according to claim 1, wherein after the step of performing laser cutting on the to-be-cut part (200) at the preset position to cut off the to-be-cut part (200), the laser cutting method further comprises:
using a third laser beam to remove the second active material (220) located on the other side of the to-be-cut part (200).

4. The laser cutting method according to claim 1, wherein the to-be-cut part (200) is of a sheet shape, and two sides of the to-be-cut part (200) are oppositely provided with a first active material (210) and a second active material (220), and the step of removing an active material on a surface of a preset position of a to-be-cut part (200) comprises:
using a first laser beam to remove the first active material (210) located on one side of the to-be-cut part (200); and
using a fourth laser beam to remove the second active material (220) located on the other side of the to-be-cut part (200).

5. The laser cutting method according to claim 1, wherein the step of removing an active material on a surface of a preset position of a to-be-cut part (200) comprises:
coating a chemical agent on the preset position of the to-be-cut part (200) to remove the active material on the surface of the to-be-cut part (200).

6. The laser cutting method according to claim 1, wherein the step of removing an active material on a surface of a preset position of a to-be-cut part (200) comprises:
brushing or scraping off the active material on the surface of the preset position of the to-be-cut part (200).

## Patentansprüche

1. Laserschneidverfahren, umfassend
Entfernen eines aktiven Materials an einer Oberfläche einer voreingestellten Position eines zu schneidenden Teils (200), **dadurch gekennzeichnet, dass**:
das aktive Material ein ternäres positives Elektrodenmaterial ist und das zu schneidende Teil (200) eine Plusplatte ist, welche eine Träger-Aluminiumfolie ist; und dass das Verfahren des Weiteren Folgendes umfasst:
Durchführen eines Laserschneidvorgangs an dem zu schneidenden Teil (200) an der vorgegebenen Position, um das zu schneidende Teil (200) abzuschneiden;
wobei der Schritt des Entfernens eines aktiven Materials auf einer Oberfläche an einer voreingestellten Position eines zu schneidenden Teils (200) umfasst:
Durchführen einer Laserbestrahlung an der voreingestellten Position des zu schneidenden Teils (200), um das aktive Material auf der Oberfläche des zu schneidenden Teils (200) zu entfernen;
wobei das zu schneidende Teil (200) plattenförmig ausgebildet ist und zwei Seiten des zu schneidenden Teils (200) gegenüberliegend mit einem ersten aktiven Material (210) und einem zweiten aktiven Material (220) versehen sind, und der Schritt des Entfernens eines aktiven Materials an einer Oberfläche einer voreingestellten Position eines zu schneidenden Teils (200) aufweist:
Verwenden eines ersten Laserstrahls, um das erste aktive Material (210) zu entfernen, das sich auf einer Seite des zu schneidenden Teils (200) befindet;
und wobei der Schritt des Durchführens eines Laserschneidens an dem zu schneidenden Teil (200) an der voreingestellten Position, um das zu schneidende Teil (200) abzutrennen, umfasst:
Verwenden eines zweiten Laserstrahls, um das zu schneidende Teil (200) abzutrennen;
wobei die Energiedichte des ersten Laserstrahls relativ gering ist, sodass er nur das erste aktive Material (210) entfernen kann, ohne das zu schneidende Teil (200) zu beschädigen, und die Energiedichte des zweiten Laserstrahls relativ groß ist, sodass das zu schneidende Teil (200) und das zweite aktive Material (220) leicht abgetrennt werden können, wobei die Energiedichten des ersten und des zweiten Laserstrahls, die für das schichtweise Schneiden verwendet werden, unterschiedlich sind, um für die Zuverlässigkeit des schichtweisen Schneidens zu sorgen.

2. Laserschneidverfahren gemäß dem Anspruch 1, wobei das Laserschneidverfahren des Weiteren umfasst:
Verwenden des zweiten Laserstrahls zum Entfernen des zweiten aktiven Materials (220), das sich auf der anderen Seite des zu schneidenden Teils (200) befindet, während der Schritt des Laserschneidens an dem zu schneidenden Teil (200) an der voreingestellten Position durchgeführt wird, um das zu schneidende Teil (200) abzutrennen.

3. Laserschneidverfahren gemäß Anspruch 1, wobei das Laserschneidverfahren nach dem Schritt des Durchführens des Laserschneidens an dem zu schneidenden Teil (200) an der voreingestellten Position zum Abtrennen des zu schneidenden Teils (200) des Weiteren umfasst:
Verwenden eines dritten Laserstrahls zum Entfernen des zweiten aktiven Materials (220), das sich auf der anderen Seite des zu schneidenden Teils (200) befindet.

4. Laserschneidverfahren gemäß Anspruch 1, wobei das zu schneidende Teil (200) plattenförmig ausgebildet ist und zwei Seiten des zu schneidenden Teils (200) gegenüberliegend mit einem ersten aktiven Material (210) und einem zweiten aktiven Material (220) versehen sind, und wobei der Schritt des Entfernens eines aktiven Materials auf einer Oberfläche an einer voreingestellten Position eines zu schneidenden Teils (200) umfasst:
Verwenden eines ersten Laserstrahls zum Entfernen des ersten aktiven Materials (210), das sich auf einer Seite des zu schneidenden Teils (200) befindet; und
Verwenden eines vierten Laserstrahls zum Entfernen des zweiten aktiven Materials (220), das sich auf der anderen Seite des zu schneidenden Teils (200) befindet.

5. Laserschneidverfahren gemäß Anspruch 1, wobei der Schritt des Entfernens eines aktiven Materials an einer Oberfläche einer voreingestellten Position eines zu schneidenden Werkstücks (200) umfasst:
Aufbringen eines chemischen Wirkstoffs auf die voreingestellte Position des zu schneidenden Werkstücks (200), um das aktive Material an der Oberfläche des zu schneidenden Werkstücks (200) zu entfernen.

6. Laserschneidverfahren gemäß Anspruch 1, wobei der Schritt des Entfernens eines aktiven Materials an einer Oberfläche einer voreingestellten Position eines zu schneidenden Teils (200) umfasst:
Abbürsten oder Abkratzen des aktiven Materials von der Oberfläche der voreingestellten Position des zu schneidenden Teils (200).

## Revendications

1. Procédé de découpe au laser, comprenant :
l'enlèvement d'un matériau actif sur une surface d'une position prédéfinie d'une pièce à découper (200),
**caractérisé en ce que** :
le matériau actif est un matériau d'électrode positive ternaire et la pièce à découper (200) est une plaque positive constituée d'une feuille d'aluminium porteuse ;
et **en ce que** le procédé comprend en outre les étapes suivantes :
réaliser une découpe au laser sur la pièce à découper (200) à l'emplacement prédéfini afin de découper la pièce à découper (200) ;
dans lequel l'étape consistant à retirer un matériau actif sur une surface d'une position prédéfinie d'une pièce à découper (200) comprend :
l'application d'un rayonnement laser sur la position prédéfinie de la pièce à découper (200) afin de retirer le matériau actif présent sur la surface de la pièce à découper (200) ;
dans lequel la pièce à découper (200) se présente sous la forme d'une feuille, et deux faces de la pièce à découper (200) sont pourvues, de manière opposée, d'un premier matériau actif (210) et d'un deuxième matériau actif (220), et l'étape consistant à retirer un matériau actif sur une surface d'une position prédéfinie d'une pièce à découper (200) comprend :
l'utilisation d'un premier faisceau laser pour retirer le premier matériau actif (210) situé sur un côté de la pièce à découper (200) ;
et dans lequel l'étape consistant à effectuer une découpe au laser sur la pièce à découper (200) à l'emplacement prédéfini afin de sectionner la pièce à découper (200) comprend :
l'utilisation d'un deuxième faisceau laser pour découper la pièce à découper (200) ;
dans lequel la densité d'énergie du premier faisceau laser est relativement faible, de sorte qu'il ne peut retirer que le premier matériau actif (210) sans endommager la pièce à découper (200), et la densité d'énergie du deuxième faisceau laser est relativement élevée, de sorte que la pièce à découper (200) et le deuxième matériau actif (220) puissent être facilement découpés, les densités d'énergie du premier faisceau laser et du deuxième faisceau laser utilisés pour la découpe par couches étant différentes afin de garantir la fiabilité de la découpe par couches.

2. Procédé de découpe au laser selon la revendication 1, dans lequel le procédé de découpe au laser comprend en outre :
l'utilisation du deuxième faisceau laser pour retirer le deuxième matériau actif (220) situé de l'autre côté de la pièce à découper (200) tout en effectuant l'étape consistant à réaliser la découpe au laser sur la pièce à découper (200) à la position prédéfinie afin de découper la pièce à découper (200).

3. Procédé de découpe au laser selon la revendication 1, dans lequel, après l'étape consistant à effectuer la découpe au laser sur la pièce à découper (200) à la position prédéfinie afin de découper la pièce à découper (200), le procédé de découpe au laser comprend en outre :
l'utilisation d'un troisième faisceau laser pour retirer le deuxième matériau actif (220) situé de l'autre côté de la pièce à découper (200).

4. Procédé de découpe au laser selon la revendication 1, dans lequel la pièce à découper (200) se présente sous la forme d'une feuille, et deux faces de la pièce à découper (200) sont pourvues, de manière opposée, d'un premier matériau actif (210) et d'un deuxième matériau actif (220), et l'étape consistant à retirer un matériau actif sur une surface d'une position prédéfinie d'une pièce à découper (200) comprend :
l'utilisation d'un premier faisceau laser pour retirer le premier matériau actif (210) situé sur un côté de la pièce à découper (200) ; et
l'utilisation d'un quatrième faisceau laser pour retirer le deuxième matériau actif (220) situé sur l'autre côté de la pièce à découper (200).

5. Procédé de découpe au laser selon la revendication 1, dans lequel l'étape consistant à retirer un matériau actif sur une surface d'une position prédéfinie d'une pièce à découper (200) comprend :
l'application d'un agent chimique sur la position prédéfinie de la pièce à découper (200) afin de retirer le matériau actif présent sur la surface de la pièce à découper (200).

6. Procédé de découpe au laser selon la revendication 1, dans lequel l'étape consistant à retirer un matériau actif de la surface d'un emplacement prédéfini d'une pièce à découper (200) comprend :
le brossage ou le raclage du matériau actif présent à la surface de l'emplacement prédéfini de la pièce à découper (200).
